# FASCICULE DE BREVET EUROPEEN

(11) **EP 0 976 532 B1**
(45) Date de publication et mention de la délivrance du brevet: **09.04.2003**
(21) Numéro de dépôt: 99112910.7
(22) Date de dépôt: 05.07.1999
(51) Int. Cl.: B29D 30/06

(54) **Moule pour pneumatique de véhicule, et presse de vulcanisation adaptée pour recevoir un tel moule**
Form für Fahrzeugreifen, und geeignete Vulkanisierpresse zum Aufnehmen einer solchen Form
Vehicle tyre mould, and adapted vulcanisation press for holding such a mould

(30) Priorité: 23.07.1998 FR 9809593
(43) Date de publication de la demande: 02.02.2000
(73) Titulaire: Sociéte de Technologie Michelin, 63000 Clermont-Ferrand Cedex 09 (FR)
(72) Inventeur: Bosseaux, Bernard, 63140 Chatel-Guyon (FR)
(74) Mandataire: Bauvir, Jacques

(56) Documents cités:
- EP-A- 0 368 546
- DE-B- 1 099 156
- US-A- 4 124 679
- US-A- 4 236 883
- US-A- 5 129 802

## Description

La présente invention se rapporte au moulage des pneumatiques. En particulier, elle concerne le moulage d'un pneumatique comportant des bourrelets de forme particulière, nécessitant le moulage d'une partie en contre dépouille dans la zone axialement et radialement intérieure du bourrelet. On fait référence ici à une zone qui est en contre dépouille par rapport au mouvement relatif entre le pneumatique et les pièces de moulage normalement utilisées pour mouler la surface axialement extérieure du flanc et du bourrelet d'un pneumatique.

Dans l'état de la technique, on connaît déjà des moyens pour assurer le moulage d'une partie en contre dépouille sur un bourrelet de pneumatique. Par exemple, le brevet US 5 129 802 propose d'utiliser deux anneaux de contre moulage pour la partie axialement et radialement intérieure du bourrelet, ces anneaux étant continus. Dans un tel cas, il faut introduire les anneaux de contre moulage à l'intérieur du pneumatique. Pour cela, il est nécessaire de déformer l'ébauche crue d'un pneumatique en ovalisant au moins l'un des bourrelets, afin de passer faire franchir ledit bourrelet au-delà de l'anneau de contre moulage.

Des anneaux pour le moulage de la partie radialement et axialement intérieure d'un bourrelet ont été aussi décrits en relation avec les procédés de vulcanisation dits sans membrane. On consultera par exemple le brevet US 4 236 883 qui montre de tels anneaux, réalisés cette fois en plusieurs segments adjacents circonférentiellement en position de moulage. Le brevet cité ci-dessus décrit un mécanisme occupant intégralement le volume intérieur de la presse, afin de pouvoir conférer aux différents segments de l'anneau les mouvements voulus pour que ces segments puissent avoir un mouvement de fermeture ou d'ouverture en séquence. On entend par "mouvement en séquence" le fait que, à partir d'une configuration où le moule est ouvert, les segments ne viennent pas tous en même temps à leur position de moulage. Un premier groupe est amené à sa position finale du moulage, puis les segments d'un second groupe sont insérés entre chacun des segments du premier groupe, afin de réaliser un anneau continu.

La présente invention a pour objet de proposer un moyen permettant de mouler, sur les bourrelets d'un pneumatique, des zones en contre dépouille dans le sens donné plus haut à cette expression, sans pour autant alourdir à l'excès le coût d'un moule pour pneumatique.

L'invention part de la réflexion que, si les diamètres des bourrelets du pneumatique sont suffisamment différents, il est possible d'utiliser d'un côté un anneau de contre moulage continu, c'est-à-dire en une seule pièce. En effet, le bourrelet de plus grand diamètre peut passer par dessus l'anneau de contre moulage du bourrelet de plus petit diamètre sans nécessiter aucune déformation. Cela est favorable à la bonne qualité du moulage et à l'économie du procédé. Il est en effet difficile, et préjudiciable à la qualité du pneumatique, de provoquer des déformations à cru du bandage de pneumatique. L'invention permet d'éviter toute déformation par ovalisation au stade de l'ébauche crue, ou au moins permet de les réduire de façon radicale. En effet, à ce stade, le caoutchouc cru ne dispose pas encore d'une résistance mécanique suffisante pour lui permettre de supporter aisément des phases de déformation par ovalisation, et des manipulations pour franchir un anneau rigide continu, dont le diamètre extérieur est plus grand que le diamètre intérieur des bourrelets à vulcaniser.

Pour l'autre bourrelet, on peut utiliser un anneau de contre moulage divisé en plusieurs segments. L'invention propose aussi de combiner l'utilisation des anneaux de contre moulage dont l'un est continu et l'autre est divisé, avec l'utilisation d'une membrane flexible pour mouler la partie de la cavité interne du pneumatique comprise entre les anneaux de contre moulage. Le caractère dissymétrique du moule ainsi proposé permet de loger plus facilement à l'intérieur de la presse le mécanisme nécessaire à la commande de l'anneau de contre moulage divisé en plusieurs segments et le mécanisme nécessaire au mouvement de la membrane de vulcanisation.

Le moule selon l'invention, pour un pneumatique comportant une bande de roulement, deux flancs et deux bourrelets est défini dans la revendication 1.

De préférence, le moule comprend un anneau divisé de contre-moulage pour mouler le bourrelet de plus grand diamètre depuis ladite limite radialement intérieure où le diamètre de la surface du pneumatique est Φ₂ jusqu'à une limite axialement intérieure de diamètre Φ₃, ledit anneau divisé comportant une pluralité de segments escamotables, adjacents en position de moulage.

Avantageusement, le moule selon l'invention comprend une membrane flexible pour mouler la surface intérieure du pneumatique dans la partie de la cavité interne du pneumatique comprise entre la limite de diamètre Φ₁ et la limite de diamètre Φ₃. Bien entendu, pour la partie moulant la surface extérieure du pneumatique au-delà des bourrelets, on peut utiliser n'importe quel type de moule convenable. Par exemple, les coquilles utilisées assurent le moulage des flancs seuls, alors que l'on utilise un ensemble de secteurs mobiles radialement pour mouler la bande de roulement. L'homme du métier aura reconnu un moule à secteur. Il est également possible d'utiliser un moule en deux parties. Dans ce type de moule, chaque moitié de la bande de roulement est moulée par une partie moulante solidaire d'une des coquilles. Il est également possible d'utiliser un moule en deux parties dans lequel la partie moulant la bande de roulement est elle-même réalisée en secteurs.

En fait, l'invention propose les moyens de mouler la surface intérieure du pneumatique allant jusqu'aux bourrelets. y compris au moins partiellement la partie radialement intérieure des bourrelets. C'est plus spécialement utile lorsque ladite surface présente une forme particulière, notamment en contre dépouille par rapport à une direction de référence parallèle à l'axe. Le moulage de la surface extérieure du pneumatique n'est pas le propos de la présente invention. On peut utiliser n'importe quelle technique qui s'avérera appropriée.

L'invention propose également une presse de vulcanisation pour pneumatique, comportant un mécanisme permettant de conférer à un anneau de contre moulage en plusieurs pièces tous les mouvements requis sans ajouter de commande supplémentaire à celles normalement disponibles sur une presse de vulcanisation. L'invention propose une presse de type à membrane, agencée et adaptée de façon à ce que le mouvement du plateau membrane inférieur par rapport au bâti inférieur suffise à commander également le mouvement de tous les segments de l'anneau de contre moulage.

La presse selon l'invention qui reçoit un moule pour pneumatique ayant un axe correspondant à l'axe de rotation dudit pneumatique est définie dans la revendication 6.

La description suivante illustre un mode préféré de réalisation de l'invention. Aux différentes figures, on voit :
- à la figure 1, un moule pour pneumatique selon l'invention.
- à la figure 2, une presse de vulcanisation selon l'invention dans la configuration apparaissant lors du chargement d'un bandage cru,
- aux figures 3 et 4, l'anneau divisé de contre moulage, dans la configuration apparaissant lors du chargement d'un bandage cru.
- à la figure 5, la même presse dans une première phase de sa fermeture,
- aux figures 6 et 7, l'anneau divisé de contre moulage, dans la configuration correspondant à la figure 5,
- à la figure 8, la même presse dans phase ultérieure de sa fermeture,
- aux figures 9 et 10, l'anneau divisé de contre moulage, dans la configuration correspondant à la figure 8,
- et enfin à la figure 11, la même presse en position de moulage.

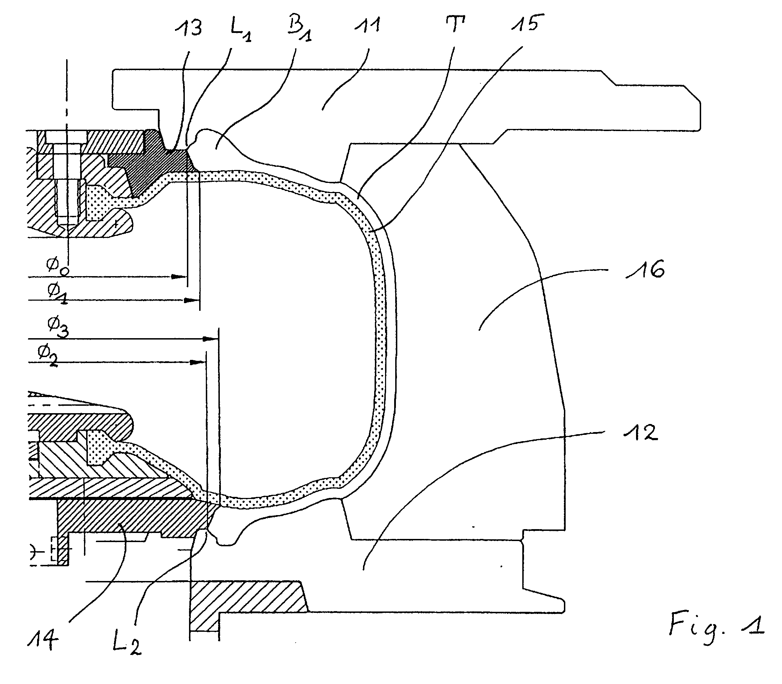

A la figure 1, on reconnaît un pneumatique T à accrochage vertical (voir brevet EP 0 673 324). Ce pneumatique T comporte deux bourrelets B1 et B2 respectivement. On voit que la forme de ces bourrelets se caractérise par des limites radialement intérieures L1 et L2 respectivement. Ces limites correspondent au point où le diamètre est le plus petit. Ainsi, pour le bourrelet B1, le diamètre à la limite L1 vaut Φ₀. Pour le bourrelet B2, le diamètre à la limite L2 vaut Φ₂. On sait que la surface extérieure des flancs d'un pneumatique, y compris le bourrelet correspondant, est en général moulé par une pièce appelée coquille. Une coquille part de la position de diamètre minimal, classiquement à la pointe du bourrelet, et va jusqu'environ au niveau des épaules du pneumatique. En fait, on utilise parfois des éléments indépendants des coquilles pour mouler la face extérieure d'un bourrelet, mais dans le contexte de la présente invention, il est indifférent que la pièce de moulage de la surface extérieure du bourrelet soit intégrée à la coquille ou séparée de celle-ci.

On sait aussi que le moulage et le démoulage d'un pneumatique supposent des mouvements relatifs dans le sens axial entre le pneumatique T et chacune des coquilles 11 et 12 qui en assurent le moulage. A la figure 1, on voit bien que la forme qu'il faut conférer à la surface extérieure des bourrelets et des flancs est compatible avec un mouvement relatif dans le sens axial entre chacune des coquilles 11 et 12 et le pneumatique T. On voit aussi qu'il faut conférer aux bourrelets B1 et B2 une forme particulière qu'il ne serait pas possible d'imprimer avec toute la précision souhaitable au moyen d'une membrane de vulcanisation. D'où l'utilisation de pièces rigides de moulage additionnelles. Ce sont ici des anneaux de contre moulage. Dans la mise en oeuvre de l'invention illustrée au dessin, l'un de ces anneaux de contre moulage 13 est continu, et l'autre 14 divisé. Le fait que celui des anneaux assurant le moulage du bourrelet de diamètre minimal le plus grand soit divisé permet de mouler sur ce bourrelet une contre dépouille importante. Il n'est pas exclu cependant de mouler certains bourrelets de diamètre minimal le plus grand avec un anneau de contre moulage non divisé. Le caractère dissymétrique du moule et l'utilisation d'un anneau de contre moulage non divisé pour le bourrelet de diamètre minimal le plus petit constituent déjà un avantage de la présente invention.

Les anneaux de contre moulage sont donc destinés à mouler la partie de chacun des bourrelets B1 et B2 comprise entre les limites respectivement L1 et L2 et jusqu'à ce que l'on retrouve une forme compatible avec le moulage au moyen d'une membrane flexible déployable à l'intérieur de la cavité interne du pneumatique. Du côté du bourrelet B1 de petit diamètre, l'anneau continu de contre moulage 13 assure le moulage entre la limite L1 correspondant au diamètre Φ₀ et le niveau de la surface intérieure du pneumatique où le diamètre a la valeur Φ₁.

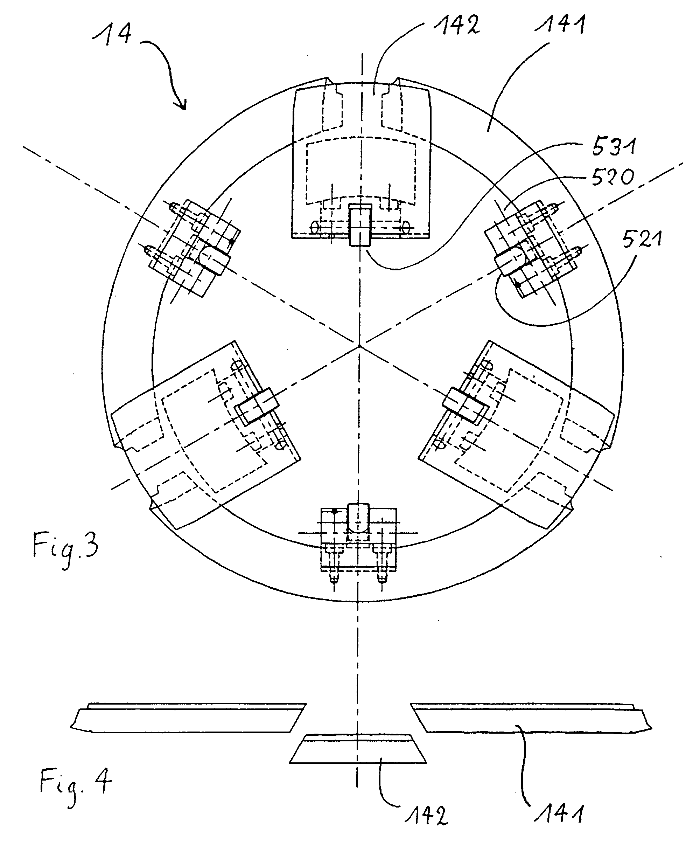

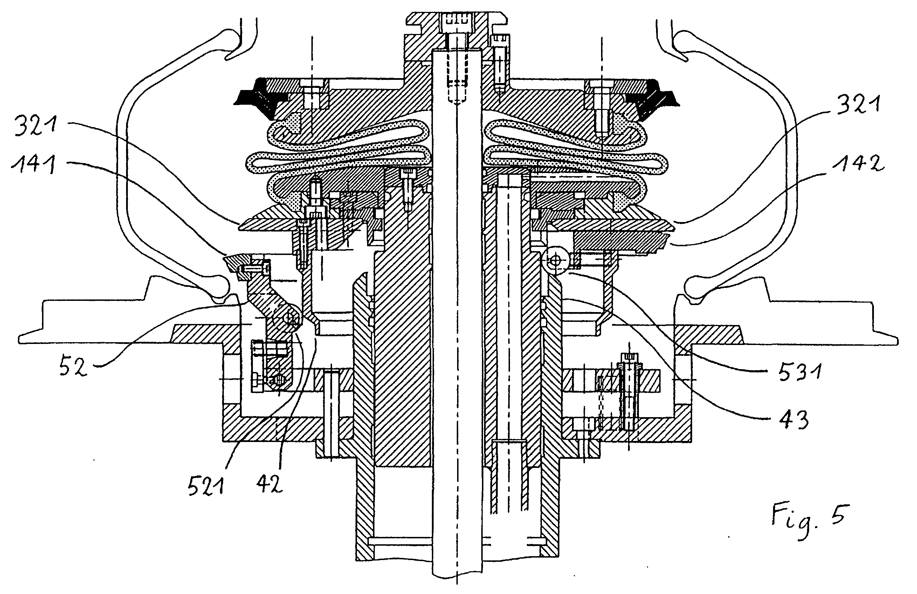

Dans le moule proposé par la présente invention, la valeur du diamètre Φ₁ est plus petite ou égale au diamètre Φ₂ correspondant à la limite L2 du bourrelet B2 de plus grand diamètre. Dès lors, sans autre mesure particulière, il est possible de faire passer l'anneau continu de contre moulage 13 par l'intérieur du bourrelet opposé B2. Cet anneau continu de contre moulage 13 est réalisé en une seule pièce. De l'autre côté, l'anneau divisé de contre moulage 14 est réalisé en plusieurs segments : les premiers segments 141 et les seconds segments 142. Cela permet d'escamoter l'anneau divisé de contre moulage 14 afin de pouvoir introduire le pneumatique dans la presse de vulcanisation et afin de pouvoir extraire le pneumatique après vulcanisation. On voit plus particulièrement aux figures 3, 6 et 9 que le moule comporte un nombre N de premiers segments 141 (ici N=3) et comporte le même nombre N de seconds segments complémentaires auxdits premiers segments. On voit plus particulièrement aux figures 4, 7 et 10 que les faces latérales, circonférentiellement, des premiers segments 141 sont convergentes à l'intérieur du moule (ce sont des segments en forme de secteurs ordinaires), et que les faces latérales des seconds segments 142 sont convergentes à l'extérieur du moule (ce sont des segments de forme de secteurs inversés). Cela permet aux seconds segments 142 (les secteurs inversés) de s'insérer entre les premiers segments (les secteurs ordinaires non inversés) en s'approchant desdits premiers segments par un mouvement axial venant de l'intérieur du moule.

Enfin, on utilise pour le reste de la cavité intérieure du pneumatique une membrane 15 de vulcanisation, car la vulcanisation en membrane est une technique bien éprouvée et fiable. On voit aussi que l'on utilise un moule à secteurs 16 mobiles par rapport aux coquilles, pour mouler la surface extérieure de la bande de roulement.

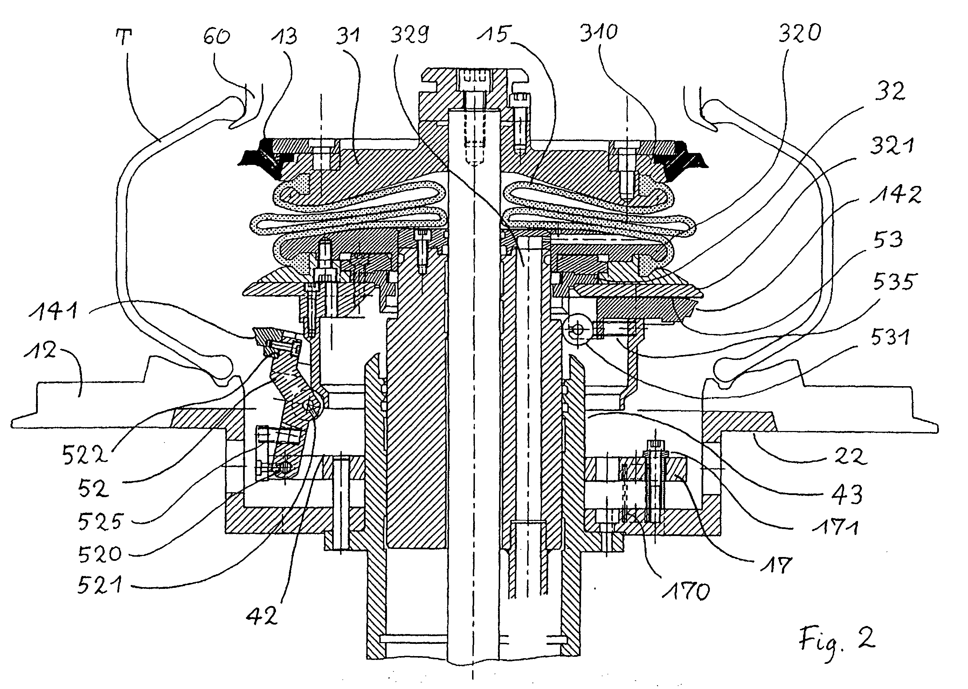

A la figure 2, on voit une presse comportant un bâti inférieur 22 sur lequel est fixée la coquille 12. La presse comporte aussi un bâti mobile (non représenté) encore appelé bâti supérieur, sur lequel est fixée la coquille 11. On désigne ici certaines pièces de la presse par les adjectifs «inférieur» et «supérieur» pour reprendre la terminologie usuelle car les presses sont en général construites pour recevoir un moule positionné à axe vertical. Bien évidemment, le caractère inférieur ou supérieur des éléments de la presse n'est pas limitatif et les termes ne sont utilisés que pour ne pas perturber le lecteur avec une terminologie qui ne serait pas usuelle.

La presse décrite utilise une membrane 15 symétrique, sans que le caractère symétrique de la membrane soit limitatif. La membrane 15 est ancrée sur un plateau-membrane inférieur 32 et sur un plateau-membrane supérieur 31. Les mouvements conférés au plateau-membrane inférieur 32 et au plateau-membrane supérieur 31 sont bien connus. Ils permettent ou facilitent le déploiement de la membrane ou bien son repli au moment du démoulage, le chargement d'un bandage cru à vulcaniser, le déchargement d'un pneumatique après vulcanisation. Sont en général prévus un mouvement axial relatif entre le plateau-membrane inférieur et le plateau-membrane supérieur ainsi qu'un mouvement de ces plateaux par rapport à la référence constituée par le bâti inférieur de la presse 22. On voit une potence de chargement 60, utilisée pour déposer un bandage cru sur la coquille 12.

L'anneau continu de contre moulage 13 est monté directement sur le plateau-membrane supérieur 31. A cette fin, ledit plateau-membrane supérieur 31 comporte une portée de montage 310 pour recevoir ledit anneau continu de contre moulage 13. Celui-ci est donc et nécessairement animé des mêmes mouvements que le plateau-membrane supérieur 31. L'anneau continu de contre moulage 13 est ainsi aisément amovible, pour s'adapter au profil que l'on veut mouler sur le bourrelet correspondant du pneumatique.

On voit également des premiers 141 et seconds 142 segments constituant ensemble l'anneau dix isé de contre moulage 14. Les seconds segments 142 s'insèrent entre les premiers segments et après leur positionnement final, comme une clé de voûte vient s'insérer en phase finale de la construction d'un arc, pour achever la constitution de l'anneau 14. L'anneau continu de contre moulage 13 assure le moulage d'une partie du bourrelet de petit diamètre, c'est à dire du bourrelet dit supérieur, en référence à sa position dans la presse. L'anneau divisé de contre moulage 14 assure le moulage d'une partie du bourrelet de grand diamètre, c'est à dire du bourrelet dit inférieur, en référence à sa position dans la presse.

Chacun des premiers segments 141 est monté sur un bras basculant 52, lui-même monté rotatif au point 520 sur un coulisseau 17. Le coulisseau 17 est monté sur le bâti inférieur 12 de la presse, et peut être translaté par rapport à celui-ci sur une courte distance, le mouvement de translation étant parallèle à l'axe. Le rôle de cette translation axiale apparaîtra dans la suite. Des ressorts 170 tendent à repousser le coulisseau 17 contre une butée 171, sa position de repos étant contre la butée 171, comme à la figure 2. Un ressort 525 (pour chacun des bras basculants 52) repousse chaque bras basculant 52 vers une position d'ouverture (ou position escamotée) telle qu'elle est représentée à la figure 3. Un galet 521 est monté rotatif sur chacun des bras basculants 52. Par ailleurs, une première came 42 est solidaire du plateau-membrane inférieur 32. Le profil de la surface radialement extérieure de cette première came 42 va permettre de définir une loi judicieuse pour le mouvement de basculement des bras basculants 52. Ici, la première came 42 comporte une rampe, ou portée conique, suivie d'une portée cylindrique. Le dispositif à bras basculants 52, galets 521 et ressorts 525 constitue un premier suiveur de came, actionnant les premiers segments 141. Les moyens pour recevoir les premiers segments sont une portée de montage 522 sur chacun des bras basculants, ce qui permet très aisément l'échange des premiers segments 141 selon le profil à mouler sur le pneumatique à fabriquer.

On voit aussi un contre plateau 320 immobilisant la membrane 15 sur le plateau-membrane inférieur 32. Le plateau-membrane inférieur 32 est monté sur une tige creuse pourvue de canalisations 329 pour amener et extraire le fluide de vulcanisation de l'intérieur de la membrane 15. On voit également un plateau de guidage 321 monté sur le plateau-membrane inférieur 32. Les seconds segments 142 sont montés sur le plateau de guidage 321, dans des glissières 53 aménagées entre ledit plateau de guidage 321 et la première came 42. Lesdits seconds segments 142 sont ainsi guidés par rapport au plateau-membrane inférieur 32. Un ressort 535 (pour chacun des seconds segments 142) repousse chaque second segment 142 vers une position d'ouverture (ou position rétractée radialement ou encore position escamotée) telle qu'elle est représentée à la figure 3. Un galet 531 est monté rotatif sur chacun des seconds segments 142. Le groupe de seconds segment est très aisément interchangeable selon le profil à mouler sur le pneumatique à fabriquer. Il suffit de monter un galet 531 sur chaque second segment 142 et d'insérer un ressort 535 lors de l'installation de chaque second segment 142, ce qui constitue les moyens pour recevoir les seconds segments 142.

Une seconde came 43 est fixée sur le bâti inférieur 22 de la presse. Le profil de la surface radialement extérieure de cette seconde came 43 va permettre de définir une loi judicieuse pour contrôler l'avancement des seconds segments 142. La seconde came comporte ici une rampe, ou portée conique, suivie d'une portée cylindrique. Le dispositif à galets 531 et ressorts 535 constitue un second suiveur de came, actionnant les seconds segments 142.

Les différentes phases du mouvement de moulage sont les suivantes.

A partir du moment où l'on a déposé le bandage cru sur la coquille 12, on commence par réassembler les premiers et seconds segments 141 et 142. Compte tenu de la position des cames 42 et 43 par rapport aux galets 521 et 531, un mouvement relatif entre le plateau-membrane inférieur 32 et le bâti inférieur de la presse 22 amène d'abord la première came 42 à la rencontre des galets 521. La rampe de celle-ci provoque le basculement des bras basculants 52, donc l'expansion de chacun des premiers segments 141 radialement. C'est la configuration visible aux figures 4, 5 et 6.

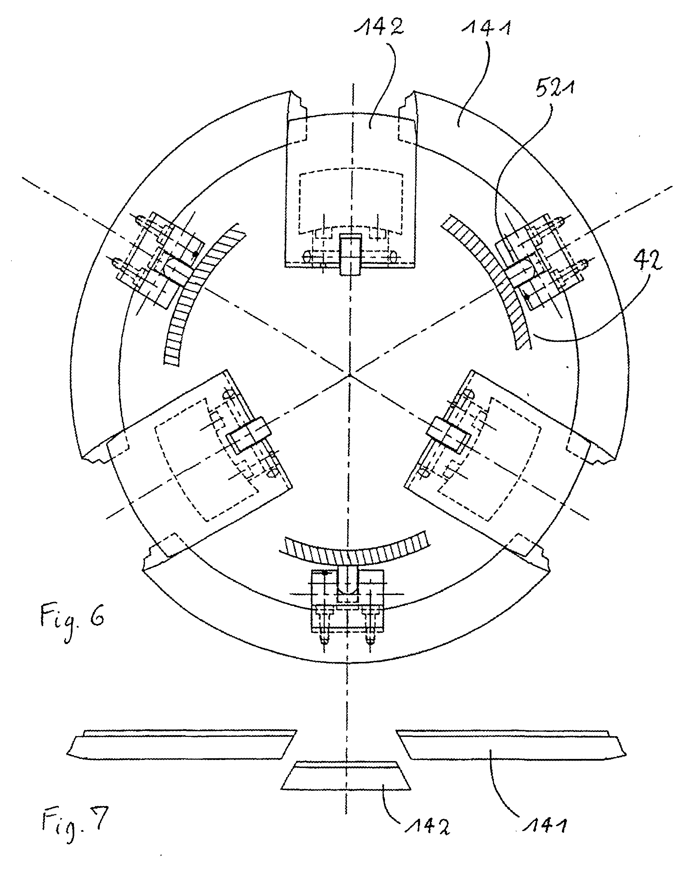

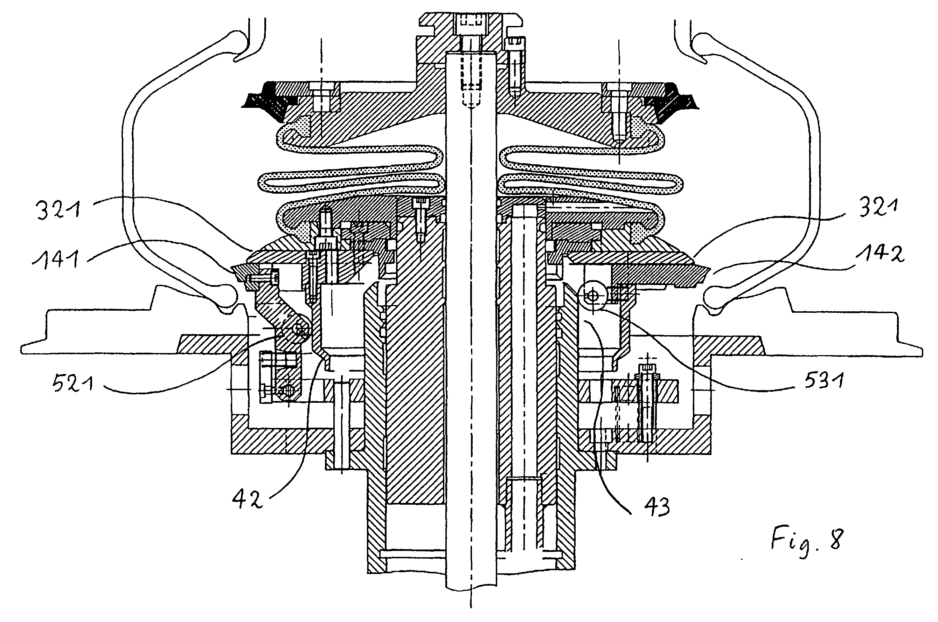

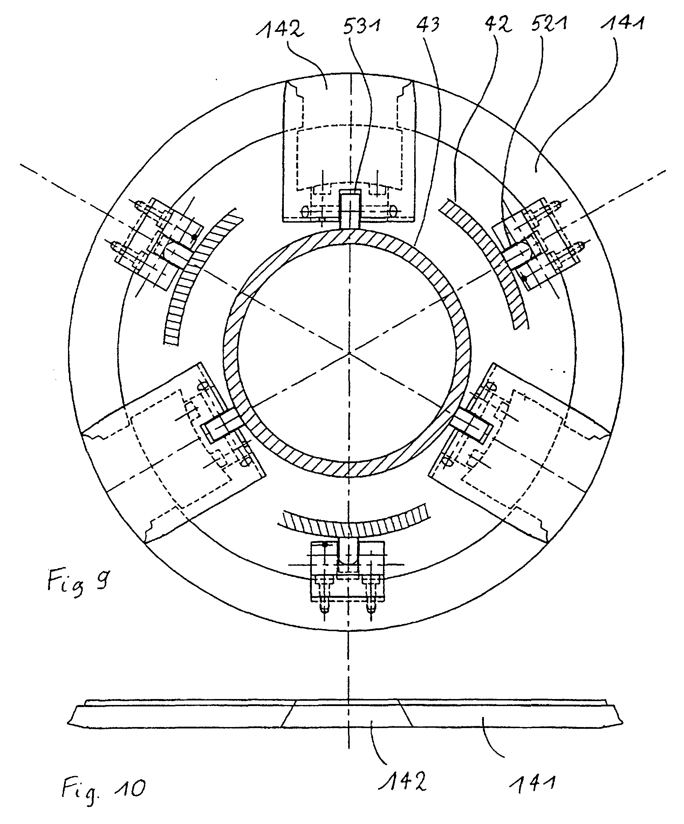

Chacun des galets 531 entre ensuite en contact et coopère avec la seconde came 43. La rampe de celle-ci provoque le déploiement radial de chacun des seconds segments 142. C'est la configuration visible aux figures 7, 8 et 9. Notons que, puisque les seconds segments 142 sont montés sur et guidés par rapport au plateau-membrane inférieur 32, et parce que l'ensemble des mouvements est commandé par le déplacement dudit plateau-membrane inférieur 32 axialement vers le bas en direction du bâti inférieur 22, le mouvement de déploiement, purement radial par rapport au plateau-membrane inférieur 32, se double d'une translation axiale qui est celle dudit plateau-membrane inférieur 32. C'est ainsi que les premiers et seconds segments 141 et 142, qui apparaissaient décalés axialement à la figure 6, sont alignés à la figure 9. A ce stade, l'anneau divisé de contre moulage 14 est reconstitué.

Le mouvement en séquence est obtenu parce que les galets 521 rencontrent la première came 42 avant que les galets 531 ne rencontrent la seconde came 43. Ici, les galets rencontrent tous la première came 42 simultanément, et les galets 531 rencontrent tous la seconde came 43 simultanément. A la figure 7, on observe aussi la valeur du décalage axial en remarquant que les galets 531 sont à la limite entre la rampe et la portée cylindrique de la seconde came 43, alors que les galets 521 sont déjà bien au delà de la limite entre la rampe et la portée cylindrique de la première came 42.

A la configuration de la figure 7, le plateau de guidage 321 vient d'entrer en contact avec les premiers segments 141. On se souvient que les seconds segments 142 sont montés sur le plateau de guidage 321. Dès lors, la poursuite du mouvement de rapprochement axial du plateau membrane inférieur 32 et du bâti inférieur 22, repousse axialement l'anneau divisé de contre moulage 14. Ce mouvement cesse lorsque l'anneau divisé de contre moulage 14 entre en contact avec la coquille 12. Cette phase finale du mouvement axial assure le moulage du bourrelet B2.

En ce qui concerne le bourrelet B1, un mouvement de rapprochement axial relatif entre la coquille 11 et le plateau-membrane supérieur 31 amène au contact l'anneau continu de contre moulage 13 et la coquille 11. Ce mouvement axial assure le moulage du bourrelet B1.

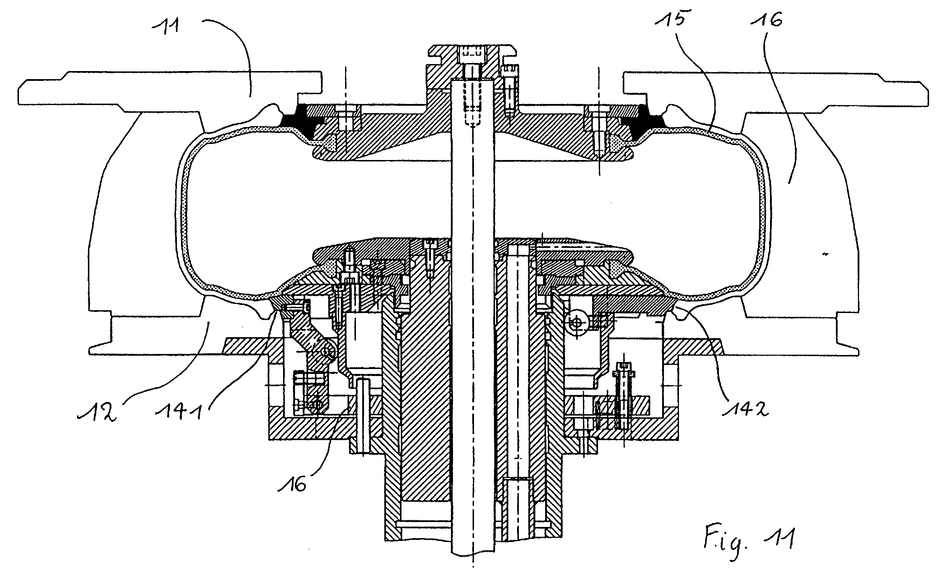

Bien entendu, le moulage des bourrelets B1 et B2 par les anneaux de contre moulage respectivement 13 et 14 peut être simultané. Le déploiement de la membrane 15 intervient de préférence après le moulage des bourrelets par les anneaux de contre moulage, qui vient d'être expliqué ci-dessus. La presse se trouve alors dans la configuration de la figure 10. La poursuite de la vulcanisation est classique.

En fin de vulcanisation, on replie la membrane 15. On escamote l'anneau divisé de contre moulage 14, par un écartement relatif du plateau membrane inférieur 32 par rapport au bâti inférieur 22 (ce qui provoque en séquence inverse l'ensemble des mouvements explicités ci-dessus). Ensuite, ou simultanément ou auparavant, on écarte axialement l'anneau continu de contre moulage 13 par rapport à la coquille 11, ce qui permet d'insérer une pince de déchargement sous le bourrelet B1.

L'anneau divisé de contre moulage est agencé en une disposition alternée où les premiers segments sont liés au bâti inférieur de la presse alors que les seconds segments sont liés au plateau-membrane inférieur. L'invention autorise une réalisation de grande compacité, ce qui permet de maintenir un mécanisme interne nécessaire au déploiement de la membrane flexible de vulcanisation. Cela permet aussi d'obtenir tous les mouvements voulus sans autre commande que celle des plateaux-membranes inférieur et supérieur. Bien entendu, on peut si on le souhaite, équiper le bâti mobile de la presse des moyens de commande permettant de mouler au moyen d'un anneau de contre moulage en plusieurs pièces. L'invention permet de mouler de façon précise les bourrelets de ceux des pneumatiques dont le bourrelet présente une forme particulière. L'invention permet de concilier le moulage de formes complexes avec une relative simplicité du moule et de la presse de vulcanisation. Notamment, la presse de vulcanisation ne comporte aucune commande de mouvement supplémentaire par rapport aux commandes de mouvement existant déjà dans les presses de vulcanisation à membrane tout à fait classiques.

## Revendications

1. Moule pour pneumatique (T) comportant une bande de roulement, deux flancs et deux bourrelets (B1, B2), Φ₀ étant le diamètre minimal de la surface du pneumatique au bourrelet, ledit moule comportant :
• deux coquilles (11, 12) pour mouler respectivement la surface extérieure de chacun des flancs et pour mouler la partie extérieure de chacun des bourrelets jusqu'à une limite radialement intérieure où le diamètre de la surface du pneumatique est minimal,
• un anneau continu de contre-moulage (13) pour mouler l'un des bourrelet depuis ladite limite radialement intérieure où le diamètre de la surface du pneumatique est Φ₀ jusqu'à une limite axialement intérieure de diamètre Φ₁, avec **Φ**₁ plus grand que Φ₀,
**ledit moule étant caractérisé en ce que**
• les deux flancs et les deux bourrelets sont non symétriques, Φ₀ étant le diamètre minimal de la surface du pneumatique au bourrelet de plus petit diamètre, Φ₂ étant le diamètre minimal de la surface du pneumatique au bourrelet de plus grand diamètre,
• l'anneau continu de contre-moulage (13) est destiné à mouler le bourrelet de plus petit diamètre et
• **Φ**₁ est plus petit que Φ₂.

2. Moule selon la revendication 1, comprenant un anneau divisé de contre-moulage (14) pour mouler le bourrelet de plus grand diamètre depuis ladite limite radialement intérieure où le diamètre de la surface du pneumatique est Φ₂ jusqu'à une limite axialement intérieure de diamètre Φ₃, ledit anneau divisé comportant une pluralité de segments (141, 142) escamotables, adjacents en position de moulage.

3. Moule selon la revendication 1 ou 2, comprenant une membrane flexible (15) pour mouler la surface intérieure du pneumatique dans la partie de la cavité interne du pneumatique comprise entre la limite de diamètre Φ₁ et la limite de diamètre Φ₃.

4. Moule selon l'une des revendications 1 à 3, dans lequel la pluralité de segments escamotables comporte un nombre N de premiers segments (141) dont les faces latérales, circonférentiellement, sont convergentes à l'intérieur du moule, et comporte le même nombre N de seconds segments (142) complémentaires auxdits premiers segments.

5. Moule selon l'une des revendications 1 à 4, comportant des secteurs (16) mobiles par rapport aux coquilles, pour mouler la surface extérieure de la bande de roulement.

6. Presse de vulcanisation de pneumatiques, recevant un moule pour pneumatique ayant un axe correspondant à l'axe de rotation dudit pneumatique, ledit moule comportant :
• deux coquilles (11, 12) pour mouler la surface extérieure d'un flanc et pour mouler la partie extérieure d'un des bourrelets jusqu'à une limite radialement intérieure où le diamètre de la surface du pneumatique est minimal,
• au moins un anneau divisé de contre moulage (14) pour mouler la surface d'un bourrelet au-delà de ladite limite et du côté axialement intérieur, ledit anneau divisé de contre-moulage étant constitué par des premiers segments (141) et des seconds segments (142), lesdits premiers et seconds segment étant adjacents en position de moulage,
ladite presse comportant :
• un bâti inférieur (22) pour recevoir l'une des coquilles,
• un bâti mobile pour recevoir l'autre coquille,
• des moyens de commande du rapprochement et de l'éloignement relatifs desdits bâti inférieur et bâti mobile,
• des premiers moyens pour recevoir les premiers segments et des seconds moyens pour recevoir les seconds segments, l'ensemble des premiers et seconds segments formant ledit anneau divisé de contre-moulage,
• un mécanisme de déplacement des premiers et seconds segments, ledit mécanisme de déplacement assurant le mouvement en séquences successives des premiers segments dans une première séquence, et des seconds segments dans une seconde séquence, de façon à amener en position de moulage et à escamoter lesdits segments de l'anneau de contre-moulage,
**caractérisée en ce que**
• le moule comporte une membrane (15) de moulage de l'intérieur du pneumatique,
• ladite presse comporte un plateau-membrane inférieur (32) et des moyens de commande du mouvement relatif entre le plateau-membrane inférieur et le bâti inférieur (22) et
• le mécanisme de déplacement est actionné par le mouvement relatif du plateau-membrane inférieur par rapport au bâti inférieur.

7. Presse selon la revendication 6, dans laquelle les premiers segments (141) sont liés au bâti inférieur (22) et les seconds segments (142) sont liés au plateau-membrane inférieur (32).

8. Presse selon la revendication 6 ou 7, dans laquelle le mécanisme de déplacement comprend :
• une première came (42) solidaire du plateau-membrane inférieur (32) et des premiers suiveurs de came actionnant les premiers segments,
• une seconde came (43) solidaire du bâti inférieur et des seconds suiveurs de came actionnant les seconds segments.

9. Presse selon la revendication 8, dans laquelle les premiers suiveurs de came sont des bras basculants (52), un galet (521) étant monté rotatif sur chacun desdits bras articulés et coopérant avec ladite première came (42).

10. Presse selon l'une des revendications 5 à 9, dans laquelle les premiers segments (141) sont montés sur un coulisseau (17) translatable par rapport au bâti inférieur (22), le mouvement de translation étant parallèle à l'axe.

11. Presse selon l'une des revendications 6 à 10, comportant un plateau-membrane supérieur (31) coulissant par rapport au plateau-membrane inférieur (32) , ledit plateau-membrane supérieur comportant des moyens d'ancrage pour ladite membrane de vulcanisation (15), ledit plateau-membrane supérieur comportant une portée de montage (310) pour recevoir un anneau continu de contre-moulage de la surface radialement et axialement intérieure d'un bourrelet.

## Claims

1. A mould for a tyre (T) comprising a tread, two sidewalls and two beads (B1, B2), Φ₀ being the minimum diameter of the surface of the tyre at the bead, said mould comprising:
• two shells (11, 12) for moulding, respectively, the outer surface of each of the sidewalls and the outer portion of each of the beads up to a radially inner limit where the diameter of the surface of the tyre is minimum;
• a continuous counter-moulding ring (13) to mould one of the beads from said radially inner limit where the diameter of the surface of the tyre is Φ₀ up to an axially inner limit of diameter Φ₁, where Φ₁ is greater than Φ₀,
said mould being **characterised in that**
• the two sidewalls and the two beads are non-symmetrical, Φ₀ being the minimum diameter of the surface of the tyre at the bead of smaller diameter, Φ₂ being the minimum diameter of the surface of the tyre at the bead of greater diameter,
• the continuous counter-moulding ring (13) is intended to mould the bead of smaller diameter and
• Φ₁ is smaller than Φ₂.

2. A mould according to claim 1, comprising a split counter-moulding ring (14) to mould the bead of greater diameter from said radially inner limit where the diameter of the surface of the tyre is Φ₂ as far as an axially inner limit of diameter Φ₃, said split ring comprising a plurality of retractable segments (141, 142) adjacent in the moulding position.

3. A mould according to claim 1 or 2, comprising a flexible membrane (15) to mould the inner surface of the tyre in the portion of the inner tyre cavity between the limit of diameter Φ₁ and the limit of diameter Φ₃.

4. A mould according to one of claims 1 to 3, in which the plurality of retractable segments comprises a number N of first segments (141) having circumferentially lateral faces which converge towards the inside of the mould and the same number N of second segments (142) complementary to said first segments.

5. A mould according to one of claims 1 to 4, comprising sectors (16) movable relative to the shells to mould the outer surface of the tread.

6. A tyre vulcanising press, receiving a tyre mould having an axis corresponding to the axis of rotation of said tyre, said mould comprising:
• two shells (11, 12) to mould the outer surface of a sidewall and the outer portion of one of the beads as far as a radially inner limit where the diameter of the surface of the tyre is minimal;
• at least one split counter-moulding ring (14) to mould the surface of a bead beyond said limit and on the axially inner side, said split counter-moulding ring being made up of first segments (141) and second segments (!42), said first and second segments being adjacent in the moulding position;
said press comprising:
• a lower frame (22) to receive one of the shells;
• a movable frame to receive the other shell;
• means for controlling the relative movement towards and away from each other of said lower frame and the mobile frame;
• first means for receiving the first segments and second means for receiving the second segments, the set of first and second segments forming said split counter-moulding ring;
• a mechanism for displacing the first and second segments, said displacing mechanism causing the movement in successive sequences of the first segments in a first sequence, and of the second segments in a second sequence, so as to bring said segments of the counter-moulding ring into the moulding position and to retract them,
**characterised in that**
• the mould comprises a membrane (15) to mould the inside of the tyre;
• said press comprises a lower membrane plate (32) and control means for the relative movement between the lower membrane plate and the lower frame (22), and
• the displacing mechanism is actuated by the relative movement of the lower membrane plate relative to the lower frame.

7. A press according to claim 6, in which the first segments (141) are linked to the lower frame (22) and the second segments (142) are linked to the lower membrane plate (32).

8. A press according to claim 6 or 7, in which the displacing mechanism comprises:
• a first cam (42) integral with the lower membrane plate (32) and first cam followers actuating the first segments;
• a second cam (43) integral with the lower frame and second cam followers actuating the second segments.

9. A press according to claim 8, in which the first cam followers are rocking arms (52), a roller (521) being rotatably mounted on each of said arms which are articulated and co-operate with said first cam (42).

10. A press according to one of claims 5 to 9, in which the first segments (141) are mounted on a slide (17) translatable with respect to the lower frame (22), the translatory movement being parallel to the axis.

11. A press according to one of claims 6 to 10, comprising an upper membrane plate (31) sliding relative to the lower membrane plate (32), said upper membrane plate comprising anchorage means for said vulcanising membrane (15), said upper membrane plate comprising a mounting surface (310) to receive a continuous counter-moulding ring for the radially arid axially inner surface of a bead.

## Patentansprüche

1. Formwerkzeug für einen Reifen (T), der eine Lauffläche, zwei Flanken und zwei Wülste (B1, B2) aufweist, wobei Φ₀ der Mindestdurchmesser der Oberfläche des Reifens am Wulst ist, wobei das Formwerkzeug die folgenden Merkmale aufweist:
• zwei Kokillen (11, 12), um jeweils die Außenoberfläche einer jeden der Flanken abzuformen und um den Außenteil eines jeden der Wülste bis zu einer radial inneren Grenze abzuformen, wo der Durchmesser der Reifenoberfläche minimal ist, und
• einen durchgehenden Gegenformring (13), um den einen der Wülste von der genannten, radial inneren Grenze aus, wo der Durchmesser des Reifens Φ₀ ist, bis zu einer axial inneren Grenze mit dem Durchmesser Φ₁ abzuformen, wobei Φ₁ größer ist als Φ₀ ,
wobei das genannte Formwerkzeug **dadurch gekennzeichnet ist, daß**
• die beiden Flanken und die beiden Wülste nicht symmetrisch sind,
wobei Φ₀ der Mindestdurchmesser der Oberfläche des Reifens am Wulst mit dem kleineren Durchmesser und Φ₂ der Mindestdurchmesser der Oberfläche des Reifens am Wulst mit dem größeren Durchmesser ist,
• der durchgehende Gegenformring (13) dazu bestimmt ist, den Wulst mit kleinerem Durchmesser abzuformen, und
• Φ₁ kleiner ist als Φ₂.

2. Formwerkzeug nach Anspruch 1, mit einem unterteilten Gegenformring (14) zum Abformen des Wulstes mimt dem größeren Durchmesser von der genannten, radial inneren Grenze aus, wo der Durchmesser der Oberfläche des Reifens Φ₂ ist, bis zu einer axial inneren Grenze Φ₃, wobei der genannte, geteilte Ring eine Vielzahl einfahrbarer Segmente (141, 142) aufweist, die in der Abformposition nebeneinanderliegen.

3. Formwerkzeug nach einem der Ansprüche 1 oder 2, mit einer flexiblen Membran (15), um die Innenoberfläche des Reifens im Teil der inneren Höhlung des Reifens abzuformen, die zwischen der Grenze des Durchmessers Φ₁ und der Grenze des Durchmessers Φ₃ liegt.

4. Formwerkzeug nach einem der Ansprüche 1 bis 3, worin die Vielzahl der einfahrbaren Segmente eine Anzahl von N ersten Segmenten (141) aufweist, deren Seitenflächen in Umfangsrichtung zur Innenseite des Formwerkzeugs hin konvergieren, sowie die selbe Anzahl N zweiter Segmente (142), die zu den genannten ersten Segmenten komplementär sind.

5. Formwerkzeug nach einem der Ansprüche 1 bis 4, mit in Bezug auf die Kokillen beweglichen Sektoren (16), um die Außenoberfläche der Lauffläche abzuformen.

6. Vulkanisationspresse für Reifen, die ein Formwerkzeug für einen Reifen aufnimmt, das eine Achse hat, die der Drehachse des genannten Reifens entspricht, wobei das genannte Formwerkzeug die folgenden Merkmale aufweist:
• zwei Kokillen (11, 12) zum Abformen der Außenoberfläche einer Flanke und zum Abformen des Außenteils eines der Wülste, bis zu einer radial inneren Grenze, wo der Durchmesser der Oberfläche des Reifens minimal ist, und
• mindestens einen unterteilten Gegenformring (14) zum Abformen der Oberfläche eines Wulstes jenseits der genannten Grenze und auf der axial inneren Seite, wobei der genannte, unterteilte Gegenformring aus ersten Segmenten (141) und zweiten Segmenten (142) gebildet ist und die genannten ersten und zweiten Segmente in der Abformposition nebeneinanderliegen,
wobei die genannte Presse die folgenden Merkmale aufweist:
• ein unteres Gestell (22) zur Aufnahme einer der Kokillen,
• ein bewegliches Gestell zur Aufnahme der anderen Kokille,
• Mittel zum Steuern der relativen Annäherung und Entfernung des genannten unteren Gestells und des genannten beweglichen Gestells,
• erste Mittel zur Aufnahme der ersten Segmente und zweite Mittel zur Aufnahme der zweiten Segmente, wobei die Gruppe aus ersten und zweiten Segmenten den genannten, unterteilten Gegenformring bildet, und
• einen Mechanismus zur Versetzung der ersten und zweiten Segmente, wobei der genannte Versetzungsmechanismus die Bewegung der ersten Segmente in einer ersten Folge und der zweiten Segmente in einer zweiten Folge in aufeinanderfolgenden Folgen derart sicherstellt, um die genannten Segmente des Gegenformringes in die Abformposition zu verbringen und zurückzuziehen,
**dadurch gekennzeichnet, daß**
• das Formwerkzeug eine Membran (15) zum Abformen der Innenseite des Reifens aufweist,
• die genannte Presse eine untere Membranplatte (32) sowie Steuermittel zur relativen Bewegung zwischen der unteren Membranplatte und dem unteren Gestell (22) aufweist, und
• der Versetzungsmechanismus von der Relativbewegung der unteren Membranplatte in Bezug auf das untere Gestell betätigt wird.

7. Presse nach Anspruch 6, worin die ersten Segmente (141) mit dem unteren Gestell (22) verbunden sind, und die zweiten Segmente (142) mit der unteren Membranplatte (32) verbunden sind.

8. Presse nach Anspruch 6 oder 7, worin der Versetzungsmechmanismus die folgenden Merkmale aufweist:
• ein erstes Kurvenstück (42), das fest mit der unteren Membranplatte (32) verbunden ist, und erste Kurven-Mitnehmer, die die ersten Segmente betätigen, und
• ein zweites Kurvenstück (43), das fest mit dem unteren Gestell verbunden ist, und zweite Kurven-Mitnehmer, die die zweiten Segmente betätigen.

9. Presse nach Anspruch 8, worin die ersten Kurven-Mitnehmer Schwenkarme (52) sind, wobei eine Rolle (521) drehbar auf jedem der genannten, gelenkig gelagerten Arme angebracht ist und mit dem genannten, ersten Kurvenstück (42) zusammenwirkt.

10. Presse nach einem der Ansprüche 5 bis 9, worin die ersten Segmente (141) auf einer bezüglich des unteren Gestells (22) versetzbaren Kulisse (17) montiert sind, wobei die Translationsbewegung achsparallel erfolgt.

11. Presse nach einem der Ansprüche 6 bis 10, mit einer oberen Membranplatte (31), die in Bezug auf die untere Membranplatte (32) gleitet, wobei die obere Membranplatte Verankerungsmittel für die genannte Vulkanisationsmembran (15) aufweist, und wobei die genannte, obere Membranplatte einen Montagebereich (310) aufweist, um einen durchgehenden Gegenformring für die radial und axial innere Oberfläche eines Wulstes aufzunehmen.
